# EUROPEAN PATENT APPLICATION

(11) **EP 1 166 848 A1**
(43) Date of publication of application: **02.01.2002**
(21) Application number: 01305306.1
(22) Date of filing: 19.06.2001
(51) Int. Cl.: B01D 53/52, C01B 17/04

(54) **Treatment of gas streams containing hydrogen sulphide**

(30) Priority: 29.06.2000 GB 0015983
(71) Applicant: The BOC Group plc, Windlesham Surrey GU20 6HJ (GB)
(72) Inventor: Watson, Richard William, Nr Ilkley, West Yorkshire LS29 0SH (GB); Graville, Stephen Rhys, Nether Edge, Sheffield S7 1NN (GB)
(74) Representative: Wickham, Michael

(57) **Abstract**

Part of a hydrogen sulphide containing feed gas is burnt in a furnace (6) in the presence of oxygen or oxygen-enriched air. Sulphur dioxide is formed and reacts with remaining hydrogen sulphide to form sulphur vapour which is extracted by means of a condenser (16). The resulting sulphur vapour depleted gas stream is reduced to hydrogen sulphide in stage (26) of a reactor (22). Water vapour is removed from the gas mixture condensation in a quench tower (32). A part of the resulting water-depleted gas stream is recycled to the furnace (6). Another part is sent for further treatment to form a purge stream. The sulphur vapour depleted gas stream is subjected to a step of catalytic reaction between hydrogen sulphide and sulphur dioxide in stage (24) of the reactor (22) upstream of the stage (26).

## Description

This invention relates to the treatment of gas streams comprising hydrogen sulphide.

Gas streams containing hydrogen sulphide are, for example, formed as by-products of oil refining operations and need to be treated to remove noxious sulphur-containing compounds therefrom before they can be discharged to the atmosphere.

Conventionally, such gas streams are treated by the Claus process. This process typically includes an initial thermal stage in which part of the hydrogen sulphide content of the gas stream is subjected to combustion to form sulphur dioxide and water vapour. The sulphur dioxide reacts in the combustion furnace with residual hydrogen sulphide to form sulphur vapour and water vapour. The reaction between sulphur dioxide and hydrogen sulphide does not proceed to completion in the furnace. Typically two or three further stages of reaction between hydrogen sulphide and sulphur dioxide are required to achieve, say 98%, conversion to sulphur of the incoming hydrogen sulphide. The reaction in these further stages is catalysed, with sulphur vapour being removed from the gas steam upstream of each catalytic stage. Claus plants are therefore large installations employing large beds of catalysts. Modern environmental standards typically necessitate the achievement of higher conversion efficiencies than 98%. In order to meet these standards, a large "tail gas clean up unit" is typically added to the Claus plant.

Some reductions in the size of a Claus plant can be achieved if the gas that is used to support the combustion of part of the hydrogen sulphide is oxygen-enriched air rather than atmospheric air (unenriched in oxygen).

EP-A-565 316 relates to a process which is operable to reduce or eliminate the requirements for catalyst of the reaction between hydrogen sulphide and sulphur dioxide. The concept underlying most examples of the process according to EP-A-565 316 is that by recycling hydrogen sulphide to the furnace, a high effective conversion of hydrogen sulphide to sulphur can be achieved therein, thereby limiting the amount of catalytic reaction of hydrogen sulphide and sulphur dioxide downstream of the furnace. In order to form the hydrogen sulphide recycle stream, the gas stream from the furnace, downstream of a condenser for extracting sulphur vapour, is subjected to catalytic hydrogenation so as to reduce back to hydrogen sulphide all the sulphur dioxide present. Most of the water vapour is condensed out or otherwise removed from the reduced gas stream and the resulting water vapour depleted reduced gas stream is divided in to two parts, one part being returned to the furnace, and the other part being subjected to further treatment, typically in an associated Claus plant of conventional kind. In order to maintain adequate temperatures in the furnace, the source of oxygen molecules which are used to support combustion therein is a source of oxygen-enriched air containing at least 80 mole % of oxygen and more preferably a source of commercially pure oxygen.

According to our co-pending European patent application 01302815.4 (filed 27 March 2001) the need for the associated Claus plant can typically be avoided if the part of the water vapour depleted gas stream which would otherwise be treated in the associated Claus plant is subjected to treatment in order to separate by absorption hydrogen sulphide from carbon dioxide and other gases that are effectively inert in the Claus process. The resulting unabsorbed gas is typically vented to the atmosphere via an incinerator, and the absorbent is heated so as to release a hydrogen sulphide-rich gas stream which is typically recycled to the furnace.

A common occurrence in the operation of an oil refinery is for a feed gas to a Claus plant to suffer sporadic, intermittent, contamination with heavy hydrocarbons. Since oxygen reacts with these hydrocarbons in addition to hydrogen sulphide, the supply of air or oxygen to the furnace needs to be increased so as to maintain sulphur dioxide levels. At the end of a period of contamination, difficulties can arise in resetting the air or oxygen supply rate. As a result, there can be a surge in the sulphur dioxide concentration. We have found that in the process according to EP-A-565 316 such a surge in the sulphur dioxide concentration could create operating difficulties in the catalytic hydrogenator either through creation of excessive temperatures therein or through breakthrough of sulphur dioxide to the water condenser (or other means for removing water vapour), thereby creating acidic conditions in the water condenser which, would increase the rate of corrosion of its structure. If an amine unit is employed to absorb hydrogen sulphide from a part of the water vapour depleted gas stream, the amine absorbent may be irreversibly degraded and excessive erosion in the unit may also arise.

The invention provides a method and apparatus aimed at solving this problem.

According to the present invention there is provided a method of treating feed gas containing hydrogen sulphide, comprising the steps of:
a) burning in a furnace part of the hydrogen sulphide content of the feed gas so as to form sulphur dioxide and water vapour, supplying oxygen-enriched air or oxygen to the furnace to support combustion of the said part of the feed gas, and reacting in the furnace resulting sulphur dioxide with hydrogen sulphide so as to form as effluent gas stream containing sulphur vapour, water vapour, hydrogen sulphide, and sulphur dioxide;
b) extracting the sulphur vapour from the effluent gas stream so as to form a sulphur-depleted gas stream;
c) reducing to hydrogen sulphide essentially the entire content of sulphur dioxide in the sulphur-depleted gas stream so as to form a reduced gas stream;
d) removing most of the water vapour from the reduced gas stream so as to form a water vapour depleted gas stream; and
e) forming from the water vapour depleted gas stream at least one stream which is returned to the furnace, and at least one other stream which is sent for further treatment to form a purge stream;
characterised in that between the said steps b) and c) the sulphur depleted gas stream is subjected to a step of catalytic reaction between sulphur dioxide and hydrogen sulphide therein.

The invention also provides apparatus for the treatment of feed gas containing hydrogen sulphide, comprising:
a) a furnace arranged to burn in the presence of oxygen or oxygen-enriched air part of the hydrogen sulphide content of the feed gas so as to form sulphur dioxide and water vapour, and to allow reaction to take place between hydrogen sulphide and sulphur dioxide to form sulphur vapour and water vapour, the furnace having an outlet for an effluent gas stream containing sulphur vapour, water vapour, hydrogen sulphide and sulphur dioxide;
b) means for extracting sulphur vapour from the effluent gas stream and thereby forming a sulphur-depleted gas stream;
c) a reactor for reducing to hydrogen sulphide essentially the entire content of reducible sulphur species in the sulphur vapour depleted gas stream entering the reactor, and thereby forming a reduced gas stream;
d) means for extracting from the reduced gas stream most of its water vapour content and thereby forming a water vapour depleted gas stream;
e) a recycle gas passage leading from the water vapour extraction means to the furnace; and
f) a further gas passage in communication with the water vapour extraction means and with a unit for further treatment of part of the water-depleted gas stream to form a purge stream;
characterised in that the apparatus additionally includes intermediate the sulphur extraction means and the reactor a bed of catalyst selected to catalyse reaction between sulphur dioxide and hydrogen sulphide in the sulphur-depleted gas stream.

By conducting the catalytic reaction between hydrogen sulphide and sulphur dioxide, the concentration of sulphur dioxide in the sulphur-depleted gas stream is substantially reduced from what it is at the end of the sulphur extraction step of the method according to the invention. Therefore if there are any (large) peaks in the sulphur dioxide concentration, the catalytic reaction between hydrogen sulphide and sulphur dioxide is able to protect downstream units from these peaks and essentially eliminate the risk of any sulphur dioxide passing to the water removal stage.
Further, because the reduction of sulphur to hydrogen sulphide is considerably less exothermic than the corresponding reduction of sulphur dioxide, the risk of producing an excessive temperature rise in the reduction stage during peaks in the sulphur dioxide concentration is substantially reduced.

Preferably the catalytic reaction between hydrogen sulphide and sulphur dioxide is performed at temperatures above the dew point of sulphur and typically in the range of 160°C to 400°C (preferably, 160°C to 300°C).

Preferably all the sulphur formed in the catalytic reaction between hydrogen sulphide and sulphur dioxide is allowed to pass in to the reduction reactor rather than being extracted from the sulphur-depleted gas stream.

Preferably the mole ratio of hydrogen sulphide to sulphur dioxide in the sulphur-depleted gas stream at the end of step b) is normally at least 8.5 to 1. At such high ratios, which are made possible by the recycle of part of the water vapour depleted gas stream to the furnace, the sulphur dioxide concentration in the gas stream leaving the sulphur vapour extraction stage can be kept in the order of 1% during normal operation. Accordingly, only a relatively small amount of reduction is required having regard to the hydrogen sulphide content of the feed gas.

The reduction step of the method according to the present invention is preferably performed catalytically at temperatures in the range of 250°C to 400°C. The reductant is preferably hydrogen. Typically, the sulphur-depleted gas mixture contains sufficient hydrogen (by virtue of thermal cracking of hydrogen sulphide in the furnace) to reduce all the reducible sulphur species present. If needed, however, hydrogen can be supplied from an auxiliary hydrogen generator. Further, the catalytic reaction between hydrogen sulphide and sulphur dioxide reduces the amount of hydrogen required for reduction in comparison with a method in which the said catalytic reaction is omitted.

Preferably the same vessel houses the catalyst of the reaction between hydrogen sulphide and sulphur dioxide and the catalyst of the said reduction reaction:

The feed gas preferably comprises sour water stripper gas (whose principal components are typically hydrogen sulphide, water vapour and ammonia) and amine gas (whose principal components are typically hydrogen sulphide, carbon dioxide and water vapour) or amine gas alone. The sour water stripper gas and the amine gas may be premixed or supplied separately to the furnace. All the amine gas is desirably fed to the hottest region of the furnace so as to ensure complete destruction of ammonia.

The sulphur vapour is preferably extracted from the effluent gas stream by condensation.

The water vapour is preferably extracted from the reduced gas stream by direct contact condensation.

The further treatment of that part of the water vapour depleted gas stream which is not recycled may be conducted in an auxiliary Claus plant for the recovery of sulphur from a gas mixture containing hydrogen sulphide. The water vapour depleted gas stream desirably forms only a part, preferably a minor part, of the feed to the auxiliary Claus plant. As a result, any fluctuations in the composition or flow rate of the water vapour depleted gas sent to the auxiliary Claus plant have a minimal effect on the operation of the auxiliary Claus plant.

Alternatively the further treatment may comprise at least one stage of separation of hydrogen sulphide to form the said part of the water vapour depleted gas stream so as to form a hydrogen sulphide rich gas stream and a purge gas stream depleted of hydrogen sulphide. The purge gas stream may be vented to the atmosphere typically via an incinerator in which any remaining traces of hydrogen sulphide can be converted to sulphur dioxide. The hydrogen sulphide rich gas stream may be recycled to the furnace or passed as a partial feed stream to an auxiliary Claus plant, the former option eliminating the need for an auxiliary Claus plant.

The method and apparatus according to the invention will now be described by way of example with reference to the accompanying drawings, in which:
Figure 1 is a schematic flow diagram of a first plant for recovering sulphur from a gas stream containing hydrogen sulphide;
Figure 2 is a schematic flow diagram of a second plant for recovering sulphur from a gas stream containing hydrogen sulphide; and
Figure 3 is a schematic flow diagram of a third plant for recovering sulphur from a gas stream containing hydrogen sulphide.

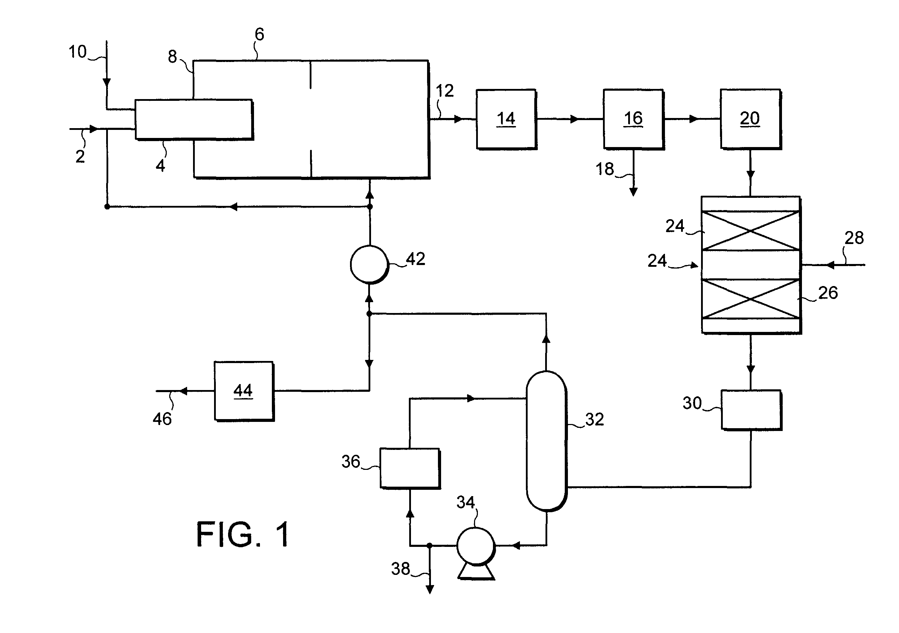

Referring to Figure 1 of the drawings, a hydrogen sulphide containing feed gas stream typically comprising hydrogen sulphide, carbon dioxide and water vapour, and sometimes additionally including one or more of hydrocarbons and ammonia is fed from a pipeline 2 to a burner 4 which fires into a thermal reactor in the form of a refractory-lined furnace 6 typically through one end wall 8 thereof or through a side wall at a position close to the end wall 8, typically at right angles to the axis of the furnace. The feed gas stream typically contains at least 70% by volume of combustibles. If the feed gas stream is a waste stream from an oil refinery it may be an acid gas (sometimes referred to as "amine gas"), or a mixture of amine gas with sour water stripper gas. The hydrogen sulphide containing feed gas stream is supplied to the burner or typically at a temperature in the range of 0°C to 90°C, preferably 10°C to 60°C, and is typically not preheated upstream of the furnace 6. The burner 4 is supplied separately from a pipeline 10 with a stream of commercially pure oxygen or a stream of air highly enriched in oxygen. In either case, the mole fraction of oxygen in the gas that is supplied along the pipeline 10 is preferably at least 0.8. Indeed, the oxygen stream typically contains at least 90% by volume of oxygen and may be separated from air by, for example, pressure swing adsorption or by fractional distillation, the latter separation method being able to produce oxygen at a purity in excess of 99%.

By means of the burner 4 a part of the hydrogen sulphide content of the feed gas is burned in the furnace 6. The rate of flow of oxygen or oxygen-enriched air along the pipeline 10 relative to the rate of flow of feed gas along the pipeline 2 is such that any hydrocarbon in the feed gas is completely oxidised, whereas only a part of the incoming hydrogen sulphide is oxidised. In addition any ammonia present is desirably completely destroyed. Thus, several chemical reactions take place in the furnace 6. Firstly, there are combustion reactions in which any hydrocarbon is completely oxidised to carbon dioxide and water vapour. Ammonia present is oxidised to nitrogen and water vapour. Care is normally taken to ensure that there is an adequate temperature (preferably at least 1300°C) to effect the oxidation of ammonia. If the ammonia is not completely destroyed, it may partake in undesirable side reactions forming substances that deposit a solid on relatively low temperature parts of the plant, thereby increasing the pressure drop to which the gas stream is subjected as it flows through the illustrated plant. However, in the method according to the invention the catalytic hydrogenation unit (to be described below) operates at a temperature well in excess of that at which such deposition of solids will occur.

Accordingly, unlike a conventional Claus process, complete destruction of ammonia may not be a practical necessity.

The main combustion reaction is, however, the burning of hydrogen sulphide to form water vapour and sulphur dioxide. Part of the resultant sulphur dioxide reacts with residual hydrogen sulphide to form sulphur vapour and further water vapour.

Another important reaction that takes place in the flame zone of the furnace 6 is the thermal dissociation of a part of the hydrogen sulphide into hydrogen and sulphur vapour. In addition, if ammonia is present, some thermal dissociation of it into hydrogen and nitrogen will take place. Employing a combustion supporting gas rich in oxygen facilitates thermal dissociation (also known as thermal cracking) of hydrogen sulphide and ammonia. Various other reactions may also take place in the furnace 6 such as the formation of carbon monoxide, carbon oxysulphide and carbon disulphide.

In general, it is preferred to employ a high flame temperature (eg in the range of 1250°C to 1650°C) so as to favour the reaction between hydrogen sulphide and sulphur dioxide and also to favour thermal dissociation of hydrogen sulphide and ammonia. Typically, recycle of hydrogen sulphide to the furnace 6 has the effect of keeping the flame temperature to the lower temperatures in the above range. In operating the burner 4 and the furnace 6, care should of course be taken to avoid damage to the furnace lining. The angle and position of entry of the burner 4 into the furnace 6 and the flame configuration are chosen so as to avoid such damage. The thermal dissociation of hydrogen sulphide has a cooling effect which can be taken into account in selecting the position and angle of entry of the burner 4.

As a result of the reactions that take place in the furnace 6, an effluent gas stream typically comprising hydrogen sulphide, sulphur dioxide, water vapour, sulphur vapour, hydrogen, carbon dioxide, carbon monoxide, argon, nitrogen and traces of carbon oxysulphide leaves the furnace 6 through an outlet 12, typically at a temperature greater than 900°C. At such temperatures, some of the components of the effluent gas stream are still reacting with one another so it is difficult to specify the precise composition of the gas mixture in the outlet 12. The gas stream passes from the outlet 12 directly into a waste heat boiler 14 or other form of heat exchanger in which it is cooled to a temperature in the range of 250°C to 400°C. During the passage of the gas stream through the waste heat boiler 14, there is a tendency for some of the hydrogen to reassociate with sulphur to form hydrogen sulphide.

The cooled effluent gas stream passes from the waste heat boiler 14 to a sulphur condenser 16 in which it is further cooled to a temperature in the range of 120°C to 160°C and in which the sulphur vapour is condensed and is extracted via an outlet 18. The resulting liquid sulphur is typically passed to a sulphur seal pit (not shown). The resulting sulphur vapour-depleted gas stream (now typically containing only traces of sulphur vapour) is heated downstream of the condenser 16 to a temperature in the range of 250°C to 350°C, typically about 300°C, for example, by indirect heat exchange with superheated steam or a hot gas, in a reheater 20.

The thus reheated sulphur vapour depleted gas stream flows in to the first stage 24 of a two stage catalytic reactor 22. The first stage comprises a conventional catalyst of the Claus reaction, that is the reaction between hydrogen sulphide and sulphur dioxide to form sulphur vapour and water vapour. Typically, the conventional catalyst is activated alumina or bauxite. In the first stage 24, most of the sulphur dioxide content of the sulphur vapour depleted gas stream reacts with hydrogen sulphide to form sulphur vapour and water vapour. If desired, the catalyst may additionally include titania so as to destroy any carbon oxysulphide in the sulphur depleted gas stream.

The resulting gas mixture flows in to the second stage 26 of the two stage catalytic reactor, which in one example of the method according to the invention includes a catalyst of cobalt-molybdenum oxides that catalyses reduction by hydrogen to hydrogen sulphide of sulphur vapour and residual sulphur dioxide. A number of other reactions can take place in the second stage of the reactor 22. In particular, any carbon monoxide present reacts with water vapour to form hydrogen and carbon dioxide. Further, at least 90% but not all of any carbon oxysulphide present in the sulphur vapour depleted gas stream is hydrolysed in the catalytic reactor to carbon dioxide and hydrogen sulphide. Similarly, any carbon disulphide present in the sulphur vapour depleted gas stream is also hydrolysed to carbon dioxide and hydrogen sulphide.

At least some of the hydrogen necessary for the reduction reactions that take place in the second stage 26 of the reactor 22 is present in the sulphur vapour depleted gas stream itself. Accordingly, there is often no need to add the necessary hydrogen reductant from an external source. It is preferred, nonetheless, to have available a pipeline 28 for the addition of external hydrogen at a rate sufficient to cause the complete reduction to hydrogen sulphide of all the sulphur and sulphur dioxide present. The external hydrogen may be generated on site, by, for example, partial oxidation of hydrocarbon, preferably using pure oxygen or oxygen-enriched air as the oxidant.

If desired, the second stage 26 of the reactor 22 may be provided with a cooling coil (not shown) through which a coolant (eg steam) may be passed in the event of there being an excessive generation of heat in the catalyst therein.

In another alternative, the sulphur vapour depleted gas stream is reheated to a temperature lower than 250°C, say in the range of 165 to 200°C, upstream of the reactor 22, and is reheated again to a temperature in the range of 250 to 400°C (say, 300°C) intermediate the stages 22 and 24.

A resulting reduced gas stream, now consisting essentially of hydrogen sulphide, water vapour, carbon dioxide, nitrogen and argon, leaves the reactor 22 and flows through a heat exchanger 30 in which it is cooled to a temperature in the range of 100°C to 200°C by indirect heat exchange with water and/or steam. The thus cooled gas stream is introduced into a desuperheating, direct contact, quench tower 32. In the quench tower 32, the gas stream flows upwardly and comes into contact with a descending stream of water. The reduced gas stream is thus cooled and a large proportion (typically in excess of 85%) of its water vapour content is condensed, the condensate entering the descending liquid stream. The tower 32 preferably contains a random or structured packing (not shown) so as to facilitate mass transfer between the ascending vapour and descending liquid. As a result, a water vapour-depleted gas stream is formed. The water exiting the bottom of the quench tower 32 is recirculated by means of a pump 34 and cooled in a cooler 36 upstream of being reintroduced into the top of the quench tower 32. Excess water is removed through an outlet 38 and sent to a sour water stripper (not shown).

The water vapour depleted gas stream is divided in to two subsidiary streams. One subsidiary stream is returned to the furnace 6 as a recycle stream. The recycle stream is preferably not reheated, but a fan 42 is typically employed to effect its flow back to the furnace 6. If desired, some or all of the recycle stream may be returned to a downstream region of the furnace 6. Alternatively or in addition , some or all of the recycle stream may be mixed with the feed gas stream upstream of the burner 4.

The other subsidiary gas stream is sent as an auxiliary feed stream to an auxiliary Claus plant 44 for further treatment. The auxiliary feed stream typically forms less than 10% of the total feed to the Claus plant 44. The Claus plant 44 may, for example, be of a kind as described in EP-A-237 216, EP-A-237 217 or EP-A-901 984, or may be a conventional air-based Claus plant and has an outlet passage 46 for purge gas which typically leads to an incinerator (not shown).

The size of the other subsidiary gas stream is arranged such that build-up of nitrogen, argon and carbon dioxide in the plant shown in Figure 1 of the drawings is avoided.

The apparatus shown in Figure 1 is able to cope well with a sudden increase in the sulphur dioxide concentration of the sulphur vapour depleted gas stream leaving the sulphur condenser 16.

This is because the first stage 24 of the reactor 22 "dampens" variations in the concentration of sulphur dioxide at the inlet to the second stage. Further, the presence of the first stage 24 acts during normal operation to reduce the sulphur dioxide concentration to less than one third of the value it would be were the first stage to be omitted. Even in the event of a sudden peak in the sulphur dioxide concentration it is expected that sufficient hydrogen would be present in the gas stream to complete the reduction in the reactor 22. Temperature or concentration monitoring can be used to initiate a supply of hydrogen through the pipeline 28 if, however, the hydrogen formed in the furnace 6 by thermal cracking of the hydrogen sulphide becomes inadequate to effect complete reduction of all the reducible sulphur species in the reactor 22. Similarly, temperature monitoring can be used to initiate or modulate a supply of coolant to the second stage in the event of the extent of the reduction reactions in the second stage 26 creating too large an exotherm in the catalyst bed therein.

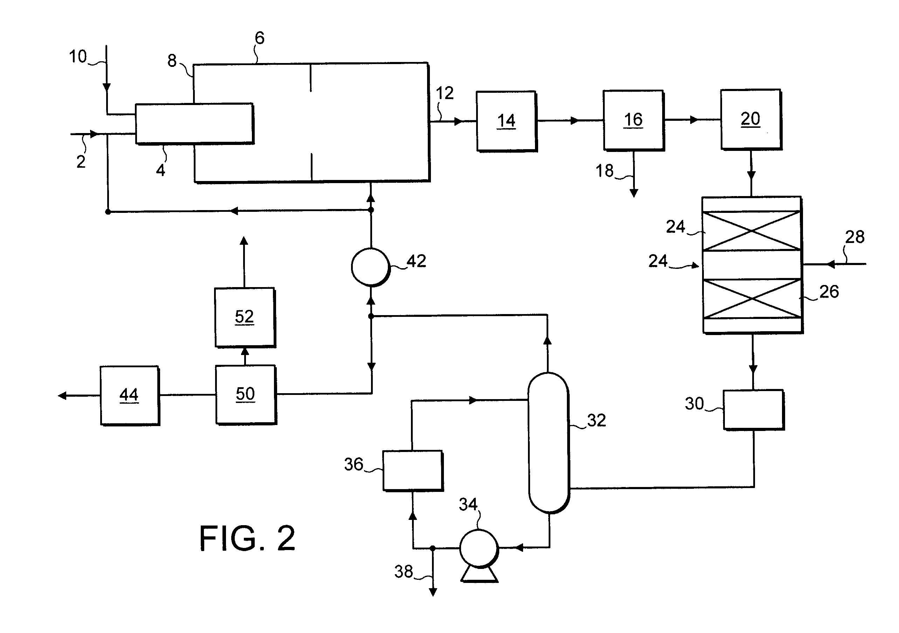

Referring now to Figure 2 of the drawings, the plant shown therein is substantially the same as that shown in Figure 1 except that the other subsidiary gas stream passes to the auxiliary Claus plant 44 via an amine absorption-desorption unit 50 which separates the gas stream in to a purge gas stream which is vented to the atmosphere via an incinerator 52 and a hydrogen sulphide-rich gas stream which is supplied as an auxiliary feed stream to the Claus plant 44. The amine is typically employed in the unit 50 in aqueous solution and is adapted for the selective separation of hydrogen sulphide from carbon dioxide. Such amines are well known in the art and generally contain substituents which sterically hinder the absorption of carbon dioxide. A particularly preferred absorbent is methyldiethanolamine.

Hydrogen sulphide is typically selectively absorbed in a first vessel or vessels (not shown) while a second vessel or vessels (not shown) are subjected to heating in order to adsorb previously absorbed hydrogen sulphide. when the absorbent in the first vessel or vessels is about to become saturated. The gas stream to be separated is switched to the second vessel or vessels, and the regeneration of the absorbent in the first vessel or vessels commences. Thus continuous operation of the absorption-desorption unit 50 may be effected. The purge gas stream is formed of the unabsorbed gas, while the hydrogen sulphide rich gas stream is formed of the gas which is desorbed during regeneration of the absorbent.

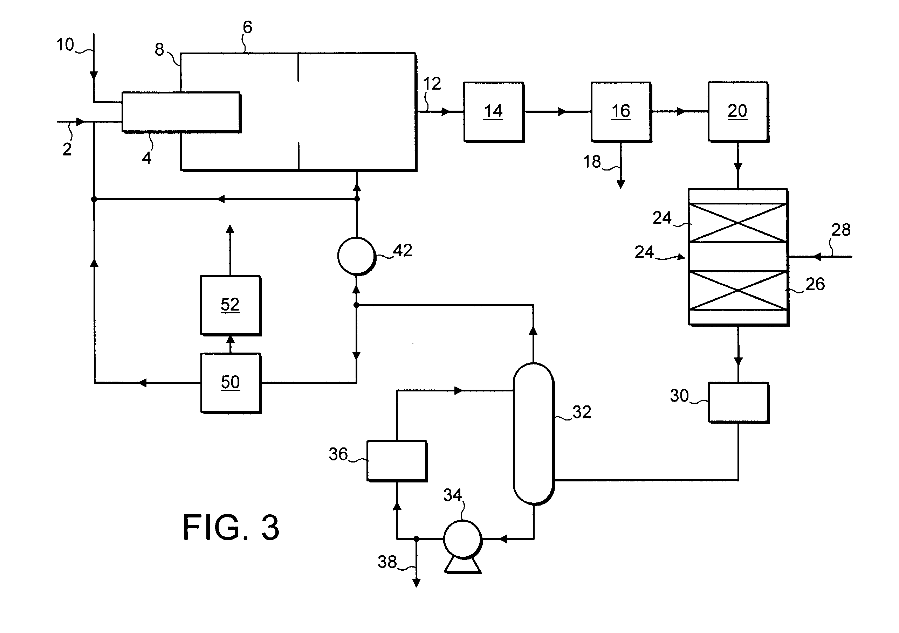

The plant shown in Figure 3 is generally similar to that shown in Figure 2, except that the auxiliary Claus plant is now omitted and the hydrogen sulphide rich gas steam is recycled to the furnace 6.

## Claims

1. A method of treating feed gas containing hydrogen sulphide, comprising the steps of:
a) burning in a furnace part of the hydrogen sulphide content of the feed gas so as to form sulphur dioxide and water vapour, supplying oxygen-enriched air or oxygen to the furnace to support combustion of the said part of the feed gas, and reacting in the furnace resulting sulphur dioxide with hydrogen sulphide so as to form as effluent gas stream containing sulphur vapour, water vapour, hydrogen sulphide, and sulphur dioxide;
b) extracting the sulphur vapour from the effluent gas stream so as to form a sulphur-depleted gas stream;
c) reducing to hydrogen sulphide essentially the entire content of sulphur dioxide in the sulphur-depleted gas stream so as to form a reduced gas stream;
d) removing most of the water vapour from the reduced gas stream so as to form a water vapour depleted gas stream;
e) forming from the water vapour depleted gas stream at least one stream which is returned to the furnace, and at least one other stream which is sent for further treatment to form a purge stream;
**characterised in that** between the said steps b) and c) the sulphur depleted gas stream is subjected to a step of catalytic reaction between sulphur dioxide and hydrogen sulphide therein.

2. A method according to claim 1, **characterised in that** all the sulphur formed in the catalystic reaction between hydrogen sulphide and sulphur dioxide is allowed to pass in to the reduction reaction.

3. A method according to claim 1 or claim 2, **characterised in that** the mole ratio of hydrogen sulphide to sulphur dioxide in the sulphur depleted gas stream at the end of step b) is normally at least 8.5 to 1.

4. A method according to any one of the preceding claims, **characterised in that** the catalytic reaction between sulphur dioxide and hydrogen sulphide is performed at temperatures above the dew point of sulphur.

5. A method according to any one of the preceding claims, **characterised in that** the reduction step is performed catalytically at temperatures in the range of 250°C to 400°C.

6. A method according to claim 5, **characterised in that** the same vessel houses the catalyst of the reaction between hydrogen sulphide and sulphur dioxide and the catalyst of the sad reduction reaction.

7. A method according to any one of the preceding claims, **characterised in that** the further treatment of the said other gas stream is conducted in an auxiliary Claus plant for the recovery of sulphur from a gas mixture containing hydrogen sulphide.

8. A method according to claim 7, **characterised in that** the said other gas stream forms only a minor part of the total feed to the auxiliary Claus plant.

9. A method according to any one of claims 1 to 6, **characterised in that** the treatment of the said other gas stream comprises at least one stage of separation of hydrogen sulphide so as to form a hydrogen sulphide rich gas stream and a purge gas stream depleted of hydrogen sulphide.

10. Apparatus for the treatment of feed gas containing hydrogen sulphide, comprising:
a) a furnace arranged to burn in the presence of oxygen or oxygen-enriched air part of the hydrogen sulphide content of the feed gas so as to form sulphur dioxide and water vapour, and to allow reaction to take place between hydrogen sulphide and sulphur dioxide to form sulphur vapour and water vapour, the furnace having an outlet for an effluent gas stream containing sulphur vapour, water vapour, hydrogen sulphide and sulphur dioxide;
b) means for extracting sulphur vapour from the effluent gas stream and thereby forming a sulphur-depleted gas stream;
c) a reactor for reducing to hydrogen sulphide essentially the entire content of sulphur dioxide in the sulphur vapour depleted gas stream entering the reactor, and thereby forming a reduced gas stream;
d) means for extracting from the reduced gas stream most of its water vapour content and thereby forming a water vapour depleted gas stream;
e) a recycle gas passage leading from the water vapour extraction means to the furnace; and
f) a further gas passage in communication with the water vapour extraction means and with a unit for further treatment of part of the water-depleted gas stream to form a purge stream;
**characterised in that** the apparatus additionally includes intermediate the sulphur extraction means and the reactor a bed of catalyst selected to catalyse reaction between sulphur dioxide and hydrogen sulphide in the sulphur-depleted gas stream.

11. Apparatus according to claim 10, **characterised in that** there is no sulphur extraction means intermediate the catalyst bed and the reactor.

12. Apparatus according to claim 10 or claim 11, **characterised in that** the reactor includes a bed of catalyst of the reduction of reducible sulphur species to hydrogen sulphide.

13. Apparatus according to claim 12, **characterised in that** the bed of catalyst selected to catalyse reaction between sulphur dioxide and hydrogen sulphide and the bed of catalyst of the reduction of reducible sulphur species to hydrogen sulphide are housed in the same vessel.

14. Apparatus according to any one of the clams 10 to 13, **characterised in that** the further treatment unit comprises an auxiliary Claus plant or a gas separation plant.
